# FASCICULE DE BREVET EUROPEEN

(11) **EP 3 545 176 B1**
(45) Date de publication et mention de la délivrance du brevet: **24.04.2024**
(21) Numéro de dépôt: 17800920.5
(22) Date de dépôt: 09.11.2017
(51) Int. Cl.: F01D 15/10, F02C 7/10, F28D 7/10, F28D 7/16, F28F 1/04, F02C 7/08, F28F 9/26

(54) **TURBOMACHINE, NOTAMMENT TURBOGENERATEUR ET ECHANGEUR POUR UNE TELLE TURBOMACHINE**
TURBINENMOTOR, INSBESONDERE TURBINENGENERATOR UND AUSTAUSCHER FÜR EINEN DERARTIGEN TURBINENMOTOR
TURBINE ENGINE, IN PARTICULAR A TURBINE GENERATOR AND EXCHANGER FOR SUCH A TURBINE ENGINE

(30) Priorité: 25.11.2016 FR 1661539
(43) Date de publication de la demande: 02.10.2019
(73) Titulaire: Turbotech, 29100 Douarnenez (FR)
(72) Inventeur: FAUVET, Damien, 78620 L'Etang la Ville (FR)
(74) Mandataire: IP Trust
(86) Numéro de dépôt international: PCT/FR2017/053060
(87) Numéro de publication internationale: WO 2018/096233

(56) Documents cités:
- EP-A1- 2 492 628
- WO-A1-2016/040964
- FR-A- 1 195 980
- US-A- 3 222 864
- US-A- 3 267 673

## Description

### Domaine de l'invention

La présente invention concerne le domaine de la production d'énergie électrique (ou mécanique) embarquée à partir de carburants pour véhicules aéronautiques, terrestres, maritimes et unités mobiles légères par un système couplant une turbine à gaz à un alternateur (production d'électricité) ou une turbine à gaz à un arbre de puissance (production d'énergie mécanique). Dans le cadre de la production d'énergie électrique, plus particulièrement, l'invention concerne des équipements appelés prolongateur d'autonomie (en anglais «range extender»).

Les applications de type « prolongateur d'autonomie » sont particulièrement adaptées à la motorisation électrique de véhicules automobiles, correspondant à une tendance forte, qui s'étend aussi à des engins aéronautiques ou maritimes. Pour des applications où la masse, le volume et/ou le coût des batteries sont critiques, les performances actuelles des batteries restent insuffisantes. Pour faire voler un aéronef électrique avec une autonomie raisonnable, il faudrait augmenter l'énergie massique des batteries les plus performantes disponibles en 2016 d'un facteur 10, alors qu'au cours des 20 dernières années, l'énergie embarquée dans les batteries n'a augmenté que d'un facteur de 2,5.

Pour pallier à cette situation, on a développé des prolongateurs d'autonomie permettant de fournir la puissance juste nécessaire en régime de croisière - voire de désactiver le fonctionnement du prolongateur d'autonomie lorsque la puissance fournie par les batteries est suffisante, et à fournir un surcroit de puissance dans les phases transitoires (accélération, charge élevée, décollage et montée d'un aéronef électrique,...).

Différentes technologies ont été mises en oeuvre :
- piles à combustibles ( « fuel cell ») dont la fiabilité n'est pas suffisante à ce jour, dont le prix est très élevé et dont la durée de vie est courte
- appoint par cellules photovoltaïques (par exemple sur le démonstrateur Solar Impulse 2 (marque commerciale)), technologie qui reste toutefois trop encombrante et dont la puissance massique est très faible
- moteur à explosion, ou Wankel (nom commercial) entraînant une génératrice, qui reste trop encombrant, et avec un rendement médiocre.

Les solutions de prolongateurs d'autonomie les plus prometteuses sont basées sur l'accouplement d'une micro-turbine équipée d'un échangeur thermique avec un alternateur (génératrice électrique)

### Etat de la technique

Il est connu d'utiliser des alternateurs de forte puissance qui sont reliés à une ligne d'arbre entraînée en rotation pour fournir de l'énergie électrique. La ligne d'arbre peut par exemple être directement entraînée par un moteur thermique. La ligne d'arbre peut également être entraînée par la circulation à vitesse élevée d'un fluide par exemple de la vapeur d'eau ou du gaz. Cette circulation peut être notamment obtenue par chauffage du fluide, par exemple en utilisant de l'énergie thermique ou de l'énergie nucléaire.

Pour amorcer la rotation de la ligne d'arbre, il est connu d'utiliser l'alternateur en mode moteur en l'alimentant à partir d'un convertisseur statique de fréquence de démarrage et d'un système d'excitation. Le système d'excitation et le convertisseur sont alimentés par un premier et un deuxième transformateur dédiés.

A titre d'exemple, on connaît par le brevet européen EP1761736 un moteur de microturbine accouplé à une génératrice électrique, comprenant:
- un compresseur fournissant un flux d'air comprimé;
- un récupérateur recevant le flux d'air comprimé du compresseur et chauffant le flux d'air comprimé avec la chaleur d'un flux de gaz d'échappement;
- un dispositif de combustion recevant le flux chauffé d'air comprimé du récupérateur, mélangeant le flux d'air comprimé avec du carburant, et brûlant le mélange de carburant et d'air comprimé pour créer le flux de gaz d'échappement;
- au moins une turbine recevant le flux de gaz d'échappement du dispositif de combustion et tournant en réponse au flux de gaz d'échappement, la rotation de la au moins une turbine entraînant le compresseur; et
- un générateur électrique générant de l'électricité en réponse à la rotation de la au moins une turbine;
- le gaz d'échappement s'écoulant de la au moins une turbine vers le récupérateur utilisé pour chauffer le flux d'air comprimé;
- le récupérateur incluant une pluralité de cellules, et le flux d'air comprimé s'écoulant dans l'espace interne des cellules à travers les tuyaux collecteurs d'entrée, puis à travers les lamelles de matrice, puis à travers les tuyaux collecteurs de sortie avant de s'écouler vers le dispositif de combustion, et le flux de gaz d'échappement s'écoulant à travers le récupérateur et entre les cellules à contre-courant par rapport au flux d'air comprimé traversant les lamelles de matrice dans les cellules.

Le brevet EP0746680 décrit un groupe générateur de turbine à gaz qui comprend un groupe rotatif renfermé dans un récupérateur circonférentiel. Le groupe rotatif comprend un alternateur-rotor situé sur un arbre commun pourvu d'une roue de turbine et d'une roue à aubes, supportées par des paliers de poussée à feuilles conformables à double essai et par un palier radial à feuilles conformables. Le récupérateur circonférentiel comprend une pluralité de feuilles adjacentes ajourées pourvues de bossages afin d'écarter structurellement les feuilles, celles-ci étant disposées de façon à former des canaux d'écoulement. Le récupérateur comprend également des collecteurs et une structure qui permet d'avoir une pression différentielle entre chaque surface de la feuille. Le récupérateur circonférentiel est constitué d'une structure unitaire entourant le groupe rotatif et le dispositif de combustion dans lequel l'air entrant est chauffé par le récupérateur avant de pénétrer dans le dispositif de combustion. Du fait de l'intercompatibilité et de la modularité des composants, la voie d'écoulement d'air associée au côté décharge du compresseur et au côté admission de la turbine se forme lors de l'installation du groupe rotatif et du récupérateur et par assemblage final du dispositif de combustion qui forme une enceinte terminale pour l'air d'admission de la turbine.

On connaît aussi par le brevet américain US6657332 un système de refroidissement de turbogénérateur présentant un puits de chaleur cylindrique pourvu d'ailettes s'étendant généralement de manière axiale à la fois sur les faces intérieure et extérieure d'une section boucle. La section boucle est pleine, à l'exception des orifices ménagés à côté de l'extrémité arrière de ladite section. Le stator du générateur est inséré par force dans le puits de chaleur jusqu'à venir en contact avec les ailettes internes. Le rotor du générateur est équipé d'un petit ventilateur permettant d'envoyer de l'air chaud loin de l'orifice d'admission du moteur. De l'air de refroidissement circule le long des ailettes externes jusqu'à l'extrémité du générateur. Cet air s'écoule à travers les orifices ménagés dans la section boucle, passe de nouveau entre l'intérieur de la section boucle et la surface extérieure du stator de manière à refroidir le stator et le long d'un passage différent, de manière à refroidir le manchon creux du rotor et les tiges à aimants permanents ainsi que le stator.

On connaît encore le brevet américain US6983787 décrivant un échangeur de chaleur à gaz d' échappement de récupération pour un moteur à turbine à gaz, une matrice créant un contre - courant de l'écoulement transversal autour duquel les flux de turbine à gaz d'échappement chauds, un tube de distribution pour diriger de l'air délivré par un compresseur dans la matrice / contre - courant et un tube collecteur qui est disposé parallèlement au tube de distribution et destiné à évacuer l'air du compresseur est chauffé par la matrice à écoulement transversal / contre - courant.

On connaît encore le brevet US3222864 décrivant un turbine à gaz présentant un récupérateur formé par un échangeur de chaleur annulaire positionné coaxialement dans l'extrémité d'échappement du carter de la turbomachine et à travers lequel s'écoulent les gaz d'échappement d'air de turbine et d'échappement de turbine. L'échangeur de chaleur est composé d'un faisceau de tubes de transfert de chaleur disposés autour d'une ouverture centrale de dérivation d'échappement à travers le récupérateur, dont les parois se séparent, mais permettent le transfert de chaleur entre les gaz d'échappement et l'air d'admission. A l'intérieur de l'ouverture du récupérateur central se trouve une soupape pour réguler l'écoulement des gaz d'échappement à travers l'ouverture.

Le brevet français FR1195980 décrit un groupe énergétique à turbine à gaz du type comprenant une turbine de travail et un échangeur de chaleur capables d'assurer un échange thermique entre les gaz d'échappement provenant de la turbine et l'air comprimé fourni par un compresseur du groupe, lequel présente les particularités suivantes, considérées séparément ou collectivement :
- L'échangeur de chaleur est annulaire et étudié pour être traversé, selon des courants séparés, par Pair comprimé et par les gaz s'échappant de la turbine et circulant en contre-courant, cet échangeur comprenant une première entrée reliée au compresseur par un conduit annulaire, et une seconde entrée reliée à l'échappement de la turbine par un autre conduit annulaire, ces deux conduits annulaires étant placés l'un dans l'autre, la paroi annulaire externe du conduit annulaire externe formant en même temps l'enveloppe du groupe;
- L'entrée d'air comprimé vers l'échangeur de chaleur est placée à un endroit situé à l'extérieur dans le sens radial, et l'entrée des gaz d'échappement vers l'échangeur thermique se trouve en un endroit situé à l'intérieur dans le sens radial, la paroi externe du conduit annulaire reliant l'entrée d'air comprimé au compresseur formant en même temps l'enveloppe du groupe.

La demande de brevet internationale WO2016040964 décrit un autre exemple connu de moteur à turbine à gaz comprenant un compresseur, une turbine, un échangeur de chaleur et une chambre de combustion. Le compresseur est monté sur un arbre rotatif avec au moins un rotor comportant une entrée et une sortie, et au moins un diffuseur en aval de chaque rotor. La turbine comprend au moins un stator, et au moins un rotor comportant une entrée et une sortie se trouvant en aval de chaque stator, et monté sur l'arbre rotatif en tant que rotor(s) de compresseur. L'entrée du rotor de compresseur est orientée vers la sortie du rotor de turbine. L'échangeur de chaleur est conçu pour préchauffer l'air comprimé sortant du compresseur par transfert de chaleur depuis l'échappement de turbine. La chambre de combustion peut être conçue pour mélanger le combustible avec l'air comprimé, soit en amont soit en aval de l'échangeur de chaleur, et en outre conçue pour allumer le mélange combustible/air préchauffé situé en aval de l'échangeur de chaleur.

Le brevet européen EP2492628 décrit un autre exemple de récupérateur configuré pour s'étendre dans un conduit d'échappement d'un moteur à turbine à gaz, le récupérateur comprenant:
- des passages d'échappement assurant une communication fluidique entre une entrée d'échappement et une sortie d'échappement, l'entrée d'échappement pour recevoir le flux d'échappement d'une turbine du moteur et la sortie d'échappement pour évacuer le flux d'échappement les passages d'échappement ayant un profil arqué dans un plan perpendiculaire à un axe central du récupérateur pour réduire un tourbillon du flux d'échappement;
- des passages d'air en relation d'échange thermique avec les passages d'échappement et assurant une communication d'écoulement de fluide entre une entrée d'air et une sortie d'air;
- un élément de connexion d'entrée définissant l'entrée d'air et conçu pour coopérer de manière étanche avec un premier plénum en communication fluidique avec une décharge de compresseur du moteur à turbine à gaz; et
- un élément de connexion de sortie définissant la sortie d'air et conçu pour entrer en contact étanche avec un second collecteur contenant une chambre de combustion du moteur à turbine à gaz.

Enfin, le document US3267673A divulgue un groupe motopropulseur à turbine à gaz comportant, espacés axialement, un compresseur de fluide, une chambre de combustion, une turbine reliée par entraînement audit compresseur, une ouverture de décharge et un passage reliant ladite turbine à ladite ouverture de décharge, un récupérateur comportant une seule série de plusieurs tubes en forme de U insérés dans les ouvertures des collecteurs.

### Inconvénients de l'art antérieur

Dans les solutions de l'art antérieur, la structure et le fonctionnement de l'échangeur ne sont pas optimisés. Les solutions prévoyant un échangeur à plaque ont un ratio masse/rendement moins intéressant que des échangeurs à tubes, à cause des contraintes de fabrication et de tenue mécanique limitant la réduction des épaisseurs de plaques, notamment.

Dans les solutions de l'art antérieur, le système d'injection carburant par cannes de vaporisation dans la chambre de combustion et de préchauffage de la chambre de combustion de la turbomachine sont deux équipements séparés, multipliant les circuits d'alimentation en carburant de la chambre de combustion

Dans les solutions de l'art antérieur, lorsque la génératrice électrique est refroidie par air, le circuit de refroidissement n'est pas à l'optimum en terme de pertes de charge, dégradant les performances globales de l'ensemble du système.

### Solution apportée par l'invention

Afin de remédier à ces inconvénients, l'invention concerne un échangeur thermique conforme à la revendication 1 et une turbomachine conforme à la revendication 2.

Selon un mode de mise en oeuvre avantageux, ledit raccord annulaire du compresseur comporte au moins un soufflet cylindrique.

Selon un autre mode de mise en oeuvre, ledit raccord annulaire de la chambre de combustion comporte au moins un soufflet cylindrique.

Selon un autre mode de mise en oeuvre, ledit raccord annulaire entre le premier faisceau de tubes et ladite structure de fermeture annulaire comporte au moins un soufflet cylindrique.

Selon un autre mode de mise en oeuvre, ledit raccord annulaire entre ladite structure de fermeture annulaire et le second faisceau de tubes comporte au moins un soufflet cylindrique.

Avantageusement lesdits soufflets sont constitués par un système de connections étanches et déformables axialement permettant de rendre libre les dilations thermiques des tubes des premières et/ou secondes sections annulaires de l'échangeur thermique.

Selon une variante particulière, la turbomachine selon l'invention comprend un système d'alimentation en carburant de la chambre de combustion constitué d'au moins une canne de vaporisation de carburant partiellement entourée par un manchon chauffant.

De préférence, que lesdites cannes de vaporisation intègrent chacune au moins un filament de métal relié à une alimentation électrique pendant les phases de démarrage pour assurer la montée en température du carburant jusqu' à la vaporisation de ce dernier à l'intérieur des cannes de vaporisation.

Selon une première application, l'axe de la turbine entraîne directement un arbre de puissance.

Selon une deuxième application, l'axe de la turbine entraîne directement une génératrice électrique.

L'invention concerne aussi un turbogénérateur comprenant une turbomachine et une génératrice électrique caractérisée en ce que l'axe de la turbine entraîne directement une génératrice électrique.

De préférence, le turbogénérateur selon l'invention comprend un circuit de refroidissement par air des éléments fixes et mobiles de ladite génératrice électrique.

Avantageusement, ledit circuit de refroidissement est composé de deux circuits parallèles, l'un pour refroidir les parties fixes, l'autre les parties mobiles, avec un système de calibration du débit indépendant pour chaque circuit d'air.

### Description détaillée d'un exemple non limitatif de réalisation

L'invention sera mieux comprise à la lecture de la description qui suit, concernant un exemple non limitatif de réalisation illustré par les dessins annexés où :
- la figure 1 représente une vue en coupe d'une turbomachine selon l'invention
- la figure 2 représente une vue en perspective d'un exemple de la structure annulaire de fermeture
- la figure 3 représente une vue détaillée, en coupe, d'un exemple de canne d'alimentation en carburant
- la figure 4 représente une vue détaillée, en coupe, d'un exemple refroidissement des parties fixes et mobiles de la génératrice.

### Contexte de l'invention

La présente invention concerne différentes implémentations possibles, pour la réalisation d'un turbogénérateur ou pour la réalisation d'une turbomachine d'entraînement d'un arbre de puissance.

Les exemples ci-dessous ne limitent pas l'invention à une application particulière, et certains modes de réalisation peuvent être mis en oeuvre soit en combinaison sur un même équipement, soit de manière indépendante sur un équipement. En particulier, l'invention concerne l'objectif général d'optimisation d'une turbomachine, à partir d'une amélioration du rendement résultant d'un échangeur amélioré, ainsi qu'une optimisation de la phase de démarrage par une canne d'alimentation améliorée, et également l'optimisation du refroidissement des parties fixes et mobiles de la génératrice, lorsque la turbomachine entraîne une génératrice.

### Description de l'échangeur

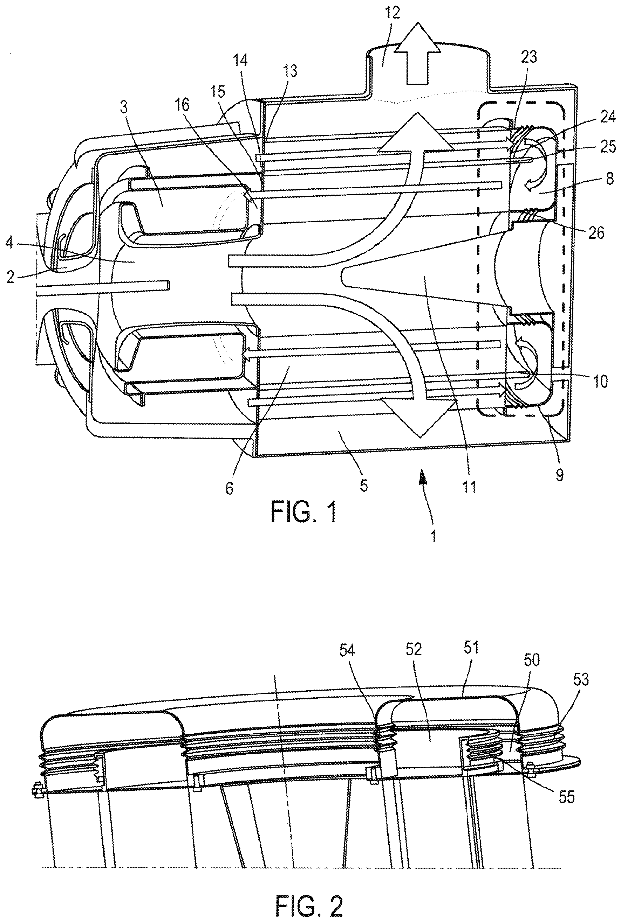

La figure 1 représente une vue en perspective de la turbomachine, comprenant un échangeur (1), un compresseur (2), une chambre de combustion (3) et une turbine (4). Un déflecteur conique (11) coaxial avec l'échangeur (1) fait circuler les gaz chauds issus de la turbine (4) en direction d'une sortie d'évacuation (12) après avoir traversé l'échangeur (1), en traversant deux cassettes (5, 6) entre les tubes.

Les parties constituées par le compresseur (2), la chambre de combustion (3) et la turbine (4) sont connues de l'homme du métier, et conformes à l'état des connaissances en matière de turbomachines.

L'échangeur (1) est constitué par un échangeur à tubes, comprenant deux cassettes annulaires (5, 6) coaxiales.

La cassette extérieure (5) est constituée par un assemblage de tubes parallèles, en alliage métallique résistant aux hautes températures, par exemple de l'acier inoxydable réfractaire 347.

A titre d'exemple, cette cassette extérieure (5) est constituée de 2000 tubes d'une longueur de 300 millimètres, d'une section intérieure de 2,8 millimètres et de section extérieure de 3 millimètres. Les tubes sont maintenus de manière connue par des intercalaires pour définir des passages des gaz chauds provenant de la turbine.

Les tubes forment un manchon d'un rayon extérieur de 158 millimètres et d'un rayon intérieur de 128 millimètres.

La cassette intérieure (6) est constituée de 2000 tubes d'une longueur de 300 millimètres, d'une section intérieure de 2,8 millimètres et de section extérieure de 3 millimètres.

Les tubes forment un manchon d'un rayon extérieur de 123 millimètres et d'un rayon intérieur de 67 millimètres.

Les deux cassettes (5, 6) sont coaxiales et encastrée l'une dans l'autre.

Ces deux cassettes (5, 6) sont réunies, à l'extrémité opposées au compresseur (2), par une structure de fermeture annulaire (8).

Chacune des cassettes (5, 6) comporte, à chaque extrémité, une plaque d'étanchéité frontale percée pour le passage des tubes, et assurant l'entraxe constant des tubes. Les tubes sont brasés ou soudés pour assurer l'étanchéité au niveau de leur raccordement avec les plaques frontales.

Cette structure de fermeture (8) est constituée de deux pièces coaxiales emboîtées, présentant la forme générale d'un moule à baba au rhum, en acier inoxydable réfractaire 347 d'une épaisseur de 2 millimètres.

La pièce extérieure (9) présente une section extérieure correspondant à la section extérieure de la cassette extérieure (5) et une section intérieure correspondant à la section intérieure de la cassette intérieure (6).

La pièce intérieure (10) présente une section extérieure correspondant à la section intérieure de la cassette extérieure (5) et une section intérieure correspondant à la section extérieure de la cassette intérieure (6).

Chacune des pièces (9, 10) présente une symétrie de révolution selon l'axe de la turbomachine, avec une section longitudinale constante.

La structure de fermeture (8) assure la déflexion des gaz provenant de la cassette extérieure (5) vers les tubes constituant la cassette intérieure (6).

Cette solution assure un double passage des gaz dans l'échangeur (1), ce qui augmente significativement son efficacité thermique pour un encombrement, et notamment une longueur, donné.

### Description des soufflets de dilatation thermique

Afin de permettre un déplacement longitudinal relatif :
- entre la cassette extérieure (5) et la cassette intérieure (6)
- entre la cassette extérieure (5) et le bâti de la turbomachine
- entre la cassette intérieure (6) et le bâti de la turbomachine

La liaison entre les cassettes (5, 6) et la structure de fermeture (8) et/ou l'alimentation annulaire de la chambre de combustion (3) et/ou la sortie annulaire du compresseur (2) est assurée par des zones déformables.

Ces zones déformables sont par exemple constituées par des soufflets métalliques formés par des tôles ondulées en acier inoxydable réfractaire 347.

Différentes combinaisons peuvent être mises en oeuvre. Sur les quatre paires de zones annulaires de liaison (13 à 16 ; 23 à 26), il est souhaitable que trois soient équipées d'une liaison annulaire déformable. Eventuellement, il est suffisant d'équiper deux zones d'une liaison déformable, lorsque la cassette extérieure (5) présente une température n'entraînant pas de dilatation significative.

Dans l'exemple décrit en figure 2, la structure de fermeture présente une forme annulaire déterminant une cavité annulaire extérieure (50) dans laquelle débouchent les gaz issus du premier faisceau de tubes pour être défléchi sur un fond (51) en direction d'une cavité annulaire intérieure (52), coaxiale avec la cavité annulaire extérieure (50), s'ouvrant sur les tubes dudit deuxième faisceau de tubes.

La paroi tubulaire extérieure de la structure de fermeture présente un soufflet de dilatation (53, 54).

De même, la paroi de séparation présente un soufflet (55).

### Description de la canne d'alimentation

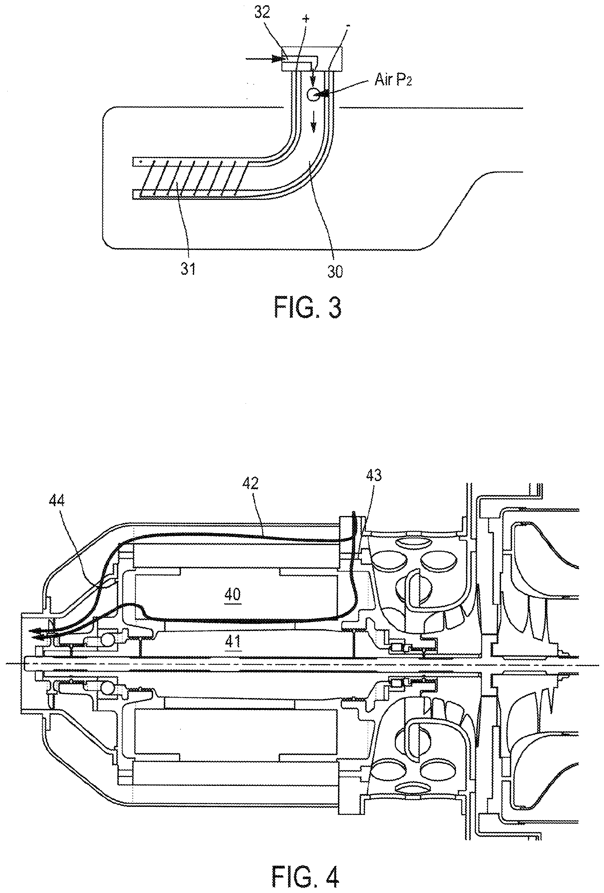

La figure 3 représente une vue détaillée d'un exemple de réalisation de la canne de vaporisation (30). Elle reçoit le carburant sous forme liquide, et comprend un conduit (32) d'alimentation en carburant et en aval un manchon de réchauffage (31) assurant la vaporisation du carburant. Ce manchon de réchauffage (31) comprend une résistance électrique.

Il peut aussi comprendre une bobine en nickel noyée dans une enveloppe de nitrure de silicium.

La sortie de la canne de vaporisation (30) peut être démultipliée pour former plusieurs buses d'injection. Chacune des buses peut optionnellement comporter un manchon de réchauffage.

### Description du circuit de refroidissement par air de la génératrice.

La figure 4 décrit une vue en coupe de la génératrice électrique, comprenant de façon connue un stator (40) et un rotor (41).

Le stator (40) présente des ailettes radiales à sa périphérie, traversé par un flux d'air frais (42). Eventuellement, la culasse statorique peut également comporter des perçages longitudinaux pour assurer des passages d'air frais.

Un second flux d'air (43) traverse l'entrefer formé entre le stator (40) et le rotor (41).

Eventuellement, le rotor (41) peut présenter des dents twistées, de forme hélicoïdales, assurant le forçage du flux d'air circulant dans l'entrefer.

La sortie de ces deux flux (42, 43) est réalisé par une plaque frontale (44) située en amont ou en aval du rotor, et présentant des orifices calibrés pour équilibrer le débit des deux flux (42, 43).

Les flux (42, 43) pénètrent d'un côté du rotor (41) et ressortent de l'autre côté du rotor (41) pour maximiser le refroidissement.

## Revendications

1. - Échangeur thermique (1) présentant une forme annulaire, formé par un assemblage de tubes indépendant assemblés par des moyens de maintien et logé dans une cavité cylindrique **caractérisé en ce qu'**il comprend deux cassettes annulaires (5, 6) coaxiales :
a) une cassette annulaire extérieure (5) formée par une première série de tubes rectilignes, s'étendant chacun entre une plaque de liaison perforée proximale et une plaque de liaison perforée distale,
- ladite cassette annulaire extérieure (5) étant apte à communiquer avec un raccord annulaire d'un compresseur (2)
b) une cassette annulaire intérieure (6), coaxiale à ladite cassette annulaire extérieure (5) formée par une deuxième série de tubes rectilignes, s'étendant chacun entre ladite plaque de liaison perforée proximale et ladite plaque de liaison perforée distale,
- ladite cassette annulaire intérieure (6) étant apte à communiquer avec un raccord annulaire d'une chambre de combustion (3)
c) lesdites deux cassettes (5, 6) étant réunies, à l'extrémité opposées au compresseur (2), par une structure de fermeture annulaire (8).

2. - Turbomachine comprenant
- un compresseur (2) déchargeant les gaz comprimés dans un échangeur thermique (1) par un premier raccord de forme annulaire
- une chambre de combustion annulaire (3), recevant les gaz provenant dudit échangeur par l'intermédiaire d'un second raccord de forme annulaire
- une turbine (4) déchargeant les gaz chauds issus de la chambre de combustion (3)
- un échangeur thermique (1) selon la revendication 1, la cavité cylindrique s'ouvrant sur la sortie de la turbine, ladite cassette annulaire extérieure (5) communiquant avec ledit raccord annulaire du compresseur (2), ladite cassette annulaire intérieure (6) communiquant avec ledit raccord annulaire de la chambre de combustion.

3. - Turbomachine selon la revendication 2 **caractérisée en ce que** ledit raccord annulaire du compresseur comporte au moins un soufflet cylindrique (53 à 55).

4. - Turbomachine selon la revendication 2 **caractérisée en ce que** ledit raccord annulaire de la chambre de combustion comporte au moins un soufflet cylindrique.

5. - Turbomachine selon la revendication 2 **caractérisée en ce que** ledit raccord annulaire entre la cassette annulaire extérieure (5) et ladite structure de fermeture annulaire comporte au moins un soufflet cylindrique.

6. - Turbomachine selon la revendication 2 **caractérisée en ce que** ledit raccord annulaire entre ladite structure de fermeture annulaire et la cassette annulaire intérieure (6) comporte au moins un soufflet cylindrique.

7. - Turbomachine selon la revendication 2 **caractérisée en ce qu'**il comprend en outre un système de connections étanches et déformables axialement permettant de rendre libre les dilations thermiques des tubes des premières et secondes sections annulaires de l'échangeur thermique.

8. - Turbomachine selon la revendication 2 **caractérisée en ce qu'**elle comprend un système d'alimentation en carburant de la chambre de combustion constitué d'au moins une canne de vaporisation de carburant partiellement entourée par un manchon chauffant.

9. - Turbomachine selon la revendication précédente **caractérisée en ce que** lesdites cannes de vaporisation intègrent chacune au moins un filament de métal relié à une alimentation électrique pendant les phases de démarrage pour assurer la montée en température du carburant jusqu' à la vaporisation de ce dernier à l'intérieur des cannes de vaporisation.

10. - Turbomachine selon la revendication 2 **caractérisée en ce que** l'axe de la turbine entraîne directement un arbre de puissance.

11. - Turbomachine selon la revendication 2 **caractérisée en ce que** l'axe de la turbine entraîne directement une génératrice électrique.

12. - Turbogénérateur comprenant une turbomachine selon la revendication 2 et une génératrice électrique **caractérisée en ce que** l'axe de la turbine entraîne directement une génératrice électrique.

13. - Turbogénérateur selon la revendication précédente **caractérisée en ce qu'**il comprend un circuit de refroidissement par air des éléments fixes et mobiles de ladite génératrice électrique.

14. - Turbogénérateur selon la revendication précédente **caractérisée en ce que** ledit circuit de refroidissement est composé de deux circuits parallèles, l'un pour refroidir les parties fixes, l'autre les parties mobiles, avec un système de calibration du débit indépendant pour chaque circuit d'air.

## Patentansprüche

1. Wärmetauscher (1), der eine ringförmige Form aufweist, der durch einen unabhängigen Zusammenbau von Röhren ausgebildet ist, die durch Haltemittel zusammengebaut sind, und in einem zylindrischen Hohlraum untergebracht ist, **dadurch gekennzeichnet, dass** er zwei koaxiale ringförmige Kassetten (5, 6) umfasst:
a) eine äußere ringförmige Kassette (5), die aus einer ersten Reihe von geraden Röhren ausgebildet ist, die sich jeweils zwischen einer proximalen perforierten Verbindungsplatte und einer distalen perforierten Verbindungsplatte erstrecken,
- wobei die äußere ringförmige Kassette (5) geeignet ist, mit einem ringförmigen Anschluss eines Kompressors (2) in Kommunikation zu stehen
b) eine innere ringförmige Kassette (6), die koaxial zu der äußeren ringförmigen Kassette (5) ist, die durch eine zweite Reihe von geraden Röhren ausgebildet ist, die sich jeweils zwischen der proximalen perforierten Verbindungsplatte und der distalen perforierten Verbindungsplatte erstrecken,
- wobei die innere ringförmige Kassette (6) geeignet ist, mit einem ringförmigen Anschluss einer Brennkammer (3) in Kommunikation zu stehen
c) wobei die zwei Kassetten (5, 6) an dem dem Kompressor (2) gegenüberliegenden Ende durch eine ringförmige Verschlussstruktur (8) zusammengeführt sind.

2. Turbomaschine, umfassend
- einen Kompressor (2), der die komprimierten Gase in einen Wärmetauscher (1) durch einen ersten ringförmigen Anschluss ablässt
- eine ringförmige Brennkammer (3), die die aus dem Wärmetauscher stammenden Gase durch einen zweiten ringförmigen Anschluss aufnimmt
- eine Turbine (4), die die aus der Brennkammer (3) ausgegebenen heißen Gase ablässt
- einen Wärmetauscher (1) nach Anspruch 1, wobei sich der zylindrische Hohlraum auf den Turbinenauslass öffnet, wobei die äußere ringförmige Kassette (5) mit dem ringförmigen Anschluss des Kompressors (2) in Kommunikation steht, wobei die innere ringförmige Kassette (6) mit dem ringförmigen Anschluss der Brennkammer in Kommunikation steht.

3. Turbomaschine nach Anspruch 2, **dadurch gekennzeichnet, dass** der ringförmige Anschluss des Kompressors mindestens einen zylindrischen Faltenbalg (53 bis 55) vorweist.

4. Turbomaschine nach Anspruch 2, **dadurch gekennzeichnet, dass** der ringförmige Anschluss der Brennkammer mindestens einen zylindrischen Faltenbalg vorweist.

5. Turbomaschine nach Anspruch 2, **dadurch gekennzeichnet, dass** der ringförmige Anschluss zwischen der äußeren ringförmigen Kassette (5) und der ringförmigen Verschlussstruktur mindestens einen zylindrischen Faltenbalg vorweist.

6. Turbomaschine nach Anspruch 2, **dadurch gekennzeichnet, dass** der ringförmige Anschluss zwischen der ringförmigen Verschlussstruktur und der inneren ringförmigen Kassette (6) mindestens einen zylindrischen Faltenbalg vorweist.

7. Turbomaschine nach Anspruch 2, **dadurch gekennzeichnet, dass** sie ferner ein System von dichten und axial verformbaren Verbindungen umfasst, das es ermöglicht, die Wärmeausdehnungen der Röhren des ersten und des zweiten ringförmigen Abschnitts des Wärmetauschers freizumachen.

8. Turbomaschine nach Anspruch 2, **dadurch gekennzeichnet, dass** sie ein System für eine Kraftstoffversorgung der Brennkammer umfasst, die aus mindestens einem Kraftstoffverdampfungsrohr besteht, das teilweise mit einer Heizmanschette umgeben ist.

9. Turbomaschine nach dem vorstehenden Anspruch,
**dadurch gekennzeichnet, dass** die Verdampfungsrohre jeweils mindestens einen Metallfaden integrieren, der während der Startphasen mit einer elektrischen Versorgung verbunden ist, um den Temperaturanstieg des Kraftstoffs bis zu der Verdampfung des letzteren im Inneren der Verdampfungsrohre sicherzustellen.

10. Turbomaschine nach Anspruch 2, **dadurch gekennzeichnet, dass** die Achse der Turbine eine Leistungswelle direkt antreibt.

11. Turbomaschine nach Anspruch 2, **dadurch gekennzeichnet, dass** die Achse der Turbine einen elektrischen Generator direkt antreibt.

12. Turbogenerator umfassend eine Turbomaschine nach Anspruch 2 und einen elektrischen Generator, **dadurch gekennzeichnet, dass** die Achse der Turbine einen elektrischen Generator direkt antreibt.

13. Turbogenerator nach dem vorstehenden Anspruch,
**dadurch gekennzeichnet, dass** er einen Kreislauf für eine Luftkühlung der festen und der beweglichen Elemente des elektrischen Generators umfasst.

14. Turbogenerator nach dem vorstehenden Anspruch,
**dadurch gekennzeichnet, dass** der Kühlkreislauf aus zwei parallelen Kreisläufen, einer zum Kühlen der festen Teile und der andere zum Kühlen der beweglichen Teile, mit einem unabhängigen Kalibrierungssystem des Durchflussstroms für jeden Luftkreislauf hergestellt ist.

## Claims

1. Heat exchanger (1) having an annular shape, formed by an independent tube assembly assembled by holding means and housed in a cylindrical cavity, **characterized in that** it comprises two coaxial annular cassettes (5, 6):
a) an outer annular cassette (5) formed by a first series of rectilinear tubes, each extending between a proximal perforated connection plate and a distal perforated connection plate,
- said outer annular cassette (5) being capable of communicating with an annular connector of a compressor (2)
b) an inner annular cassette (6) which is coaxial with said outer annular cassette (5) and formed by a second series of rectilinear tubes, each extending between said proximal perforated connection plate and said distal perforated connection plate,
- said inner annular cassette (6) being capable of communicating with an annular connector of a combustion chamber (3)
c) said two cassettes (5, 6) being joined, at the opposite end to the compressor (2), by an annular closing structure (8).

2. Turbine engine comprising
- a compressor (2) which discharges the compressed gases into a heat exchanger (1) via a first annular connector
- an annular combustion chamber (3) which receives the gases coming from said exchanger via a second annular connector
- a turbine (4) which discharges the hot gases coming from the combustion chamber (3)
- a heat exchanger (1) according to claim 1, the cylindrical cavity of which opens onto the outlet of the turbine, said outer annular cassette (5) communicating with the annular connector of the compressor (2), said inner annular cassette (6) communicating with the annular connector of the combustion chamber.

3. Turbine engine according to claim 2, **characterized in that** said annular connector of the compressor comprises at least one cylindrical bellows (53 to 55).

4. Turbine engine according to claim 2, **characterized in that** said annular connector of the combustion chamber comprises at least one cylindrical bellows.

5. Turbine engine according to claim 2, **characterized in that** said annular connector between the outer annular cassette (5) and the annular closing structure comprises at least one cylindrical bellows.

6. Turbine engine according to claim 2, **characterized in that** said annular connector between the annular closing structure and the inner annular cassette (6) comprises at least one cylindrical bellows.

7. Turbine engine according to claim 2, **characterized in that** it further comprises a system of sealed, axially deformable connections allowing the thermal expansion of the tubes of the first and second annular sections of the heat exchanger to take place freely.

8. Turbine engine according to claim 2, **characterized in that** it comprises a system for supplying fuel to the combustion chamber consisting of at least one fuel vaporization rod which is partially surrounded by a heating sleeve.

9. Turbine engine according to the preceding claim, **characterized in that** said vaporization rods each include at least one metal filament connected to a power supply during the start-up phases to ensure the fuel rises in temperature until it is vaporized inside the vaporization rods.

10. Turbine engine according to claim 2, **characterized in that** the turbine axis directly drives a power shaft.

11. Turbine engine according to claim 2, **characterized in that** the turbine axis directly drives an electric generator.

12. Turbo-generator comprising a turbine engine according to claim 2 and an electric generator, **characterized in that** the turbine axis directly drives an electric generator.

13. Turbo-generator according to the preceding claim, **characterized in that** it comprises an air cooling circuit for the fixed and movable elements of the electric generator.

14. Turbo-generator according to the preceding claim, **characterized in that** said cooling circuit consists of two parallel circuits, one for cooling the fixed parts and the other for cooling the movable parts, with an independent flow calibration system for each air circuit.
